# EUROPEAN PATENT APPLICATION

(11) **EP 1 329 181 A1**
(43) Date of publication of application: **23.07.2003**
(21) Application number: 02250284.3
(22) Date of filing: 16.01.2002
(51) Int. Cl.: A47J 37/12

(54) **A cooking appliance**

(60) Divisional application: 03075741.3
(71) Applicant: Eastern Sources Housewares (Hong Kong) Limited, Kwun Tong, Kowloon, Hong Kong (CN)
(72) Inventor: Lau, Wing Chung Joseph, 550 Victoria Road Pokfulam (CN); Ho, Leung Chi, Tseun Wan, New Territories (CN)
(74) Representative: Findlay, Alice Rosemary

(57) **Abstract**

An electrical cooking appliance having electrical heating means (12), temperature sensing means (14), a first temperature sensitive switch (58) connected to the temperature sensing means (14) and connected to the electrical heating means (12) arranged to open on sensing a first predetermined temperature and arranged in parallel with current limiting means (100), a second temperature sensing switch (96) connected to the temperature sensing means (14) and connected in series with the electrical heating means arranged to open at a second predetermined temperature higher than the first temperature.

## Description

The present invention relates to a cooking appliance, and in particular an electric deep fryer.

There are a variety of kitchen appliances designed for deep frying foodstuffs such as meats or vegetables. Commercial deep fryers used by mostly restaurants are usually of relatively large dimension wherein a relatively large quantity of oil can be contained for frying. On the other hand, domestic deep fryers are usually much smaller and more compact.

It is often quite difficult to produce fried foodstuffs which are crispy on the exterior and juicy in the exterior and where the food is not too oily or soggy after frying. This is due particularly to the difficulties in controlling the precise cooking conditions (e.g. cooking temperature) during food frying. It is especially more difficult to produce good quality deep-fried food using the smaller domestic deep fryers for which it is difficult to control the cooking temperature.

The safety of such deep dryers is also of great concern. In use, deep fryers necessarily contain a body of hot oil with temperature sometimes as high as 200°C or above. Using deep fryers for cooking is therefore potentially dangerous. Various safety features have been provided in deep fryers. For example, Applicant's own UK Patent Application Published No. 2354427 discloses various safety features of a deep fryer to ensure that operation thereof is allowed only when the heating element is properly received in the deep fryer. Additional features are desired to further improve the safety of deep fryers.

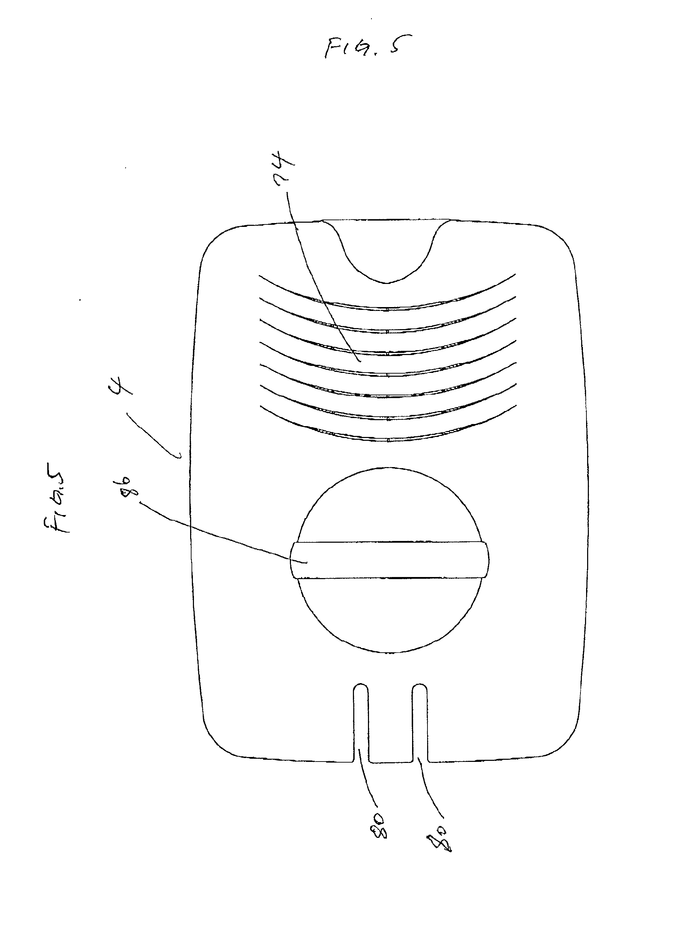

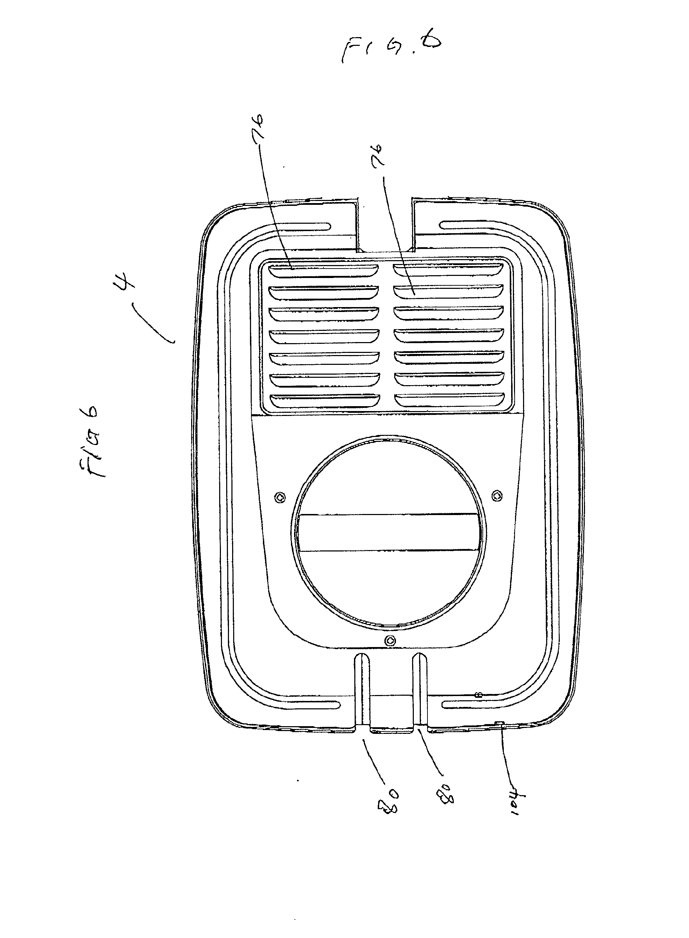

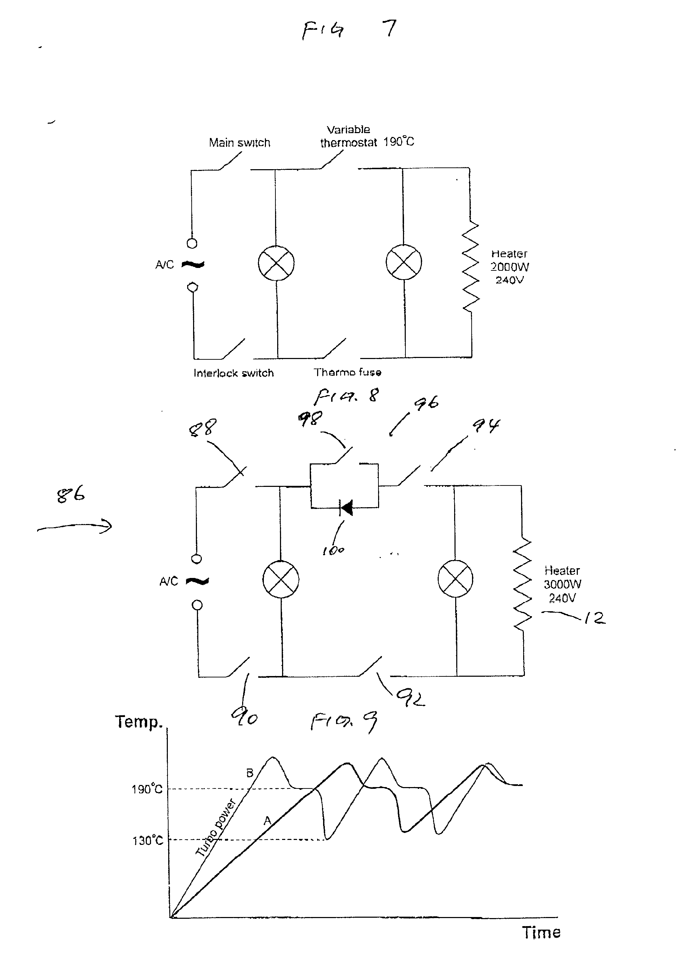

In conventional compact deep fryers, a heating element immersed in the oil is used to heat the oil. An example of a circuit used by such type of deep fryer is represented by the circuit diagram in Fig. 7. Due to the size of these deep fryers, the heating power is usually limited up to approximately 2000W. Using a higher capacity of heating element to raise the temperature of cooking medium more quickly and for a prolonged and continuous period suffers a number of drawbacks. Firstly, controlling the cooking temperature is more difficult, as the higher the power of the heating element used, the more rapid the increase in temperature of cooking medium, causing significant overshooting of the temperature of cooking oil to well above the desired frying temperature, possibly up to 220°C or above. At this high temperature, chemical changes are more likely to occur in the oil molecules. It has been reported that consumption of such degraded oil can cause cancer. In extreme cases, oil reaching extremely high temperatures will catch fire.

Secondly, manufacturing a deep fryer with a high capacity heating element for prolonged use during a cooking operation necessarily means that materials of higher technical specifications are needed. For example, the heating element must preferably be made of high quality cast aluminum or stainless steel to ensure safety and endurance. This would translate to undesirably higher production costs.

While a variable thermostat with a lower predetermined temperature whereat the heating power can be automatically and completely cut off well before (e.g. 40°C before) reaching the user-defined predetermined temperature may be used to prevent overshooting of the temperature, this would mean that constant outputting of heating power by the heating element is not available during a relatively large window of temperature range (i.e. 40°C), Without constant provision of heating power in this relatively large window of temperature range, it would take a longer time to fry the food which would become soggy and excessively oily or in some cases even over-cooked.

It is thus an object to provide a deep fryer in which the above issues are addressed, or at least to provide a useful alternative to the public.

According to a first aspect of the present invention, there is provided an electrical cooking appliance having electrical heating means, temperature sensing means, a first temperature sensitive switch connected to the temperature sensing means and connected to the electrical heating means arranged to open on sensing a first predetermined temperature and arranged in parallel with current limiting means, a second temperature sensitive switch connected to the temperature sensing means and connected in series with the electrical heating means arranged to open at a second predetermined temperature higher than the first temperature.

Preferably, the first temperature sensitive switch may be adapted to open at a fixed temperature.

Suitably, the second temperature sensitive switch may be adapted to open at a user-selectable temperature.

More particularly, the first temperature may be about 175°C and the second temperature may be adjustable in the range from about 175°C to 200°C.

Advantageously, the current limiting means is a diode.

Preferably, the electrical heating means is a heating element arranged to deliver about 3000 watts and at about 240V alternating current at a temperature below the first predetermined temperature.

According to a second aspect of the present invention, there is provided an electric deep fryer comprising a housing having a receptacle for containing, in use, cooking oil, heating means for heating the oil and a lid for closing the receptacle, wherein the lid has upper and lower surfaces, the lower surface has a peripheral region at which it fits on an upper rim of the housing, an uppermost region of this lower surface being provided with a plurality of vent openings therein to release gases formed on cooking and having upwardly inclined surfaces between the peripheral region and the uppermost surface region.

Preferably, the upper and lower lid surfaces define a substantially hollow lid.

Advantageously, the periphery of the lid is provided with at least one drain opening arranged at end of opposite lower edges of the lid. The vent openings in the lower surface may be disposed opposite to openings in the upper lid surface.

Suitably, the housing may comprise an outer housing wall having an upper rim with a clearance provided between said outer housing wall and said receptacle, and an inwardly-directed shoulder provided between the upper rim and the receptacle on which the receptacle rests, the shoulder being provided with a plurality of openings therein.

Preferably, the shoulder may be a separate part fitted on to the upper rim of the outer wall.

Advantageously, the receptacle may have an outwardly-directed ledge at its upper rim which sits on the shoulder.

Suitably, the drain openings may be arranged to lie laterally outside the receptacle interior and, whereby when fitted, any fluid draining from the lid does not drain directly into the receptacle interior.

Preferably, the lid further may comprise a control knob controlling opening and closing of the vent openings provided on the uppermost region of the lower surface.

Advantageously, the vent openings provided on the uppermost region of the lower surface are defined by a plurality of louver like openings arranged at the upper and lower lid surfaces.

The invention will now be described, by way of example only, with reference to the accompanying drawings, in which:-
Fig. 1 is a cross sectional view showing a deep fryer according to an embodiment of the present invention;
Fig. 2 is a top view of the deep fryer shown in Fig. 1 with its lid removed;
Fig. 3 is a top view of the deep fryer shown in Fig. 2 with its container and control (and heating) unit removed;
Fig. 4 is a rear view of the deep fryer shown in Fig. 3 with a partial cross sectional view;
Fig. 5 is a top view of a lid for use with the deep fryer;
Fig. 6 is a bottom view of the lid shown in Fig. 5;
Fig. 7 is a circuit diagram showing an electrical circuit used in a conventional deep fryer;
Fig. 8 is a circuit diagram showing an electrical circuit used in the deep fryer according to an embodiment of the present invention; and
Fig. 9 is a graph showing the relationship of time and cooking temperature of a conventional deep fryer and the deep fryer according to an embodiment of the present invention.

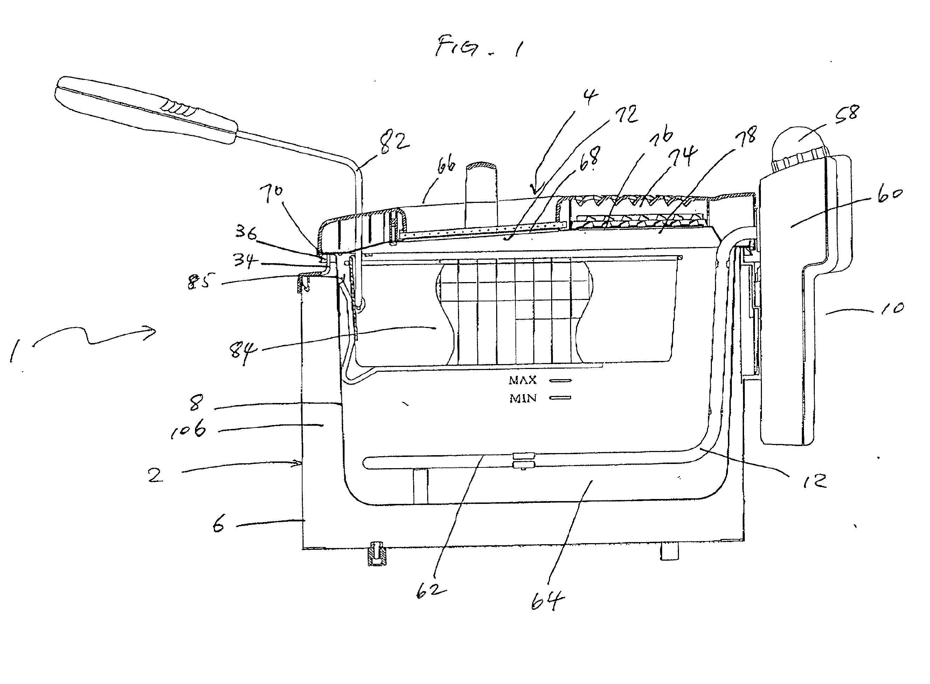

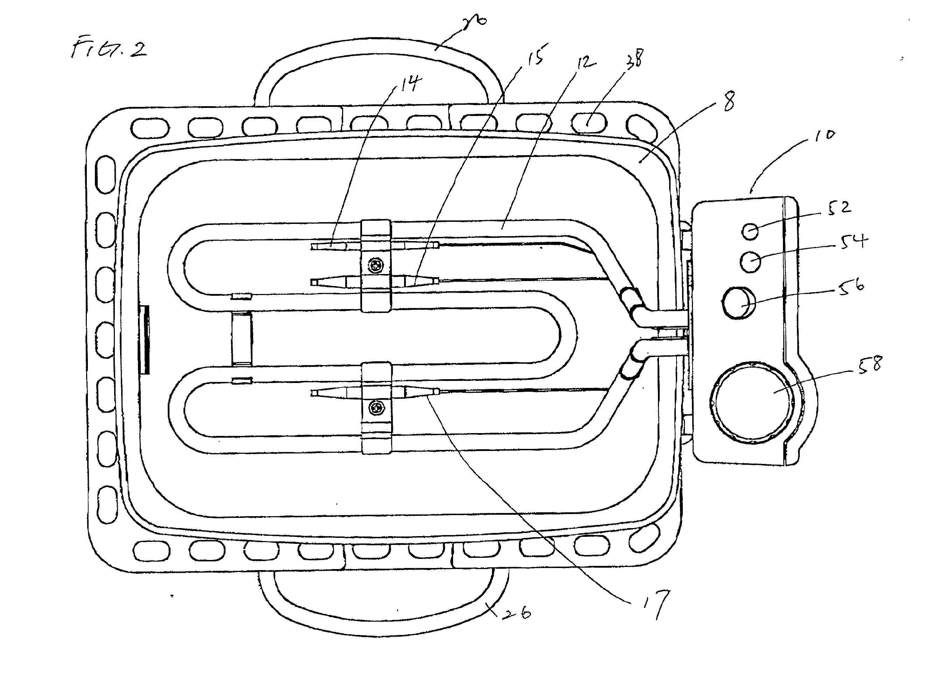

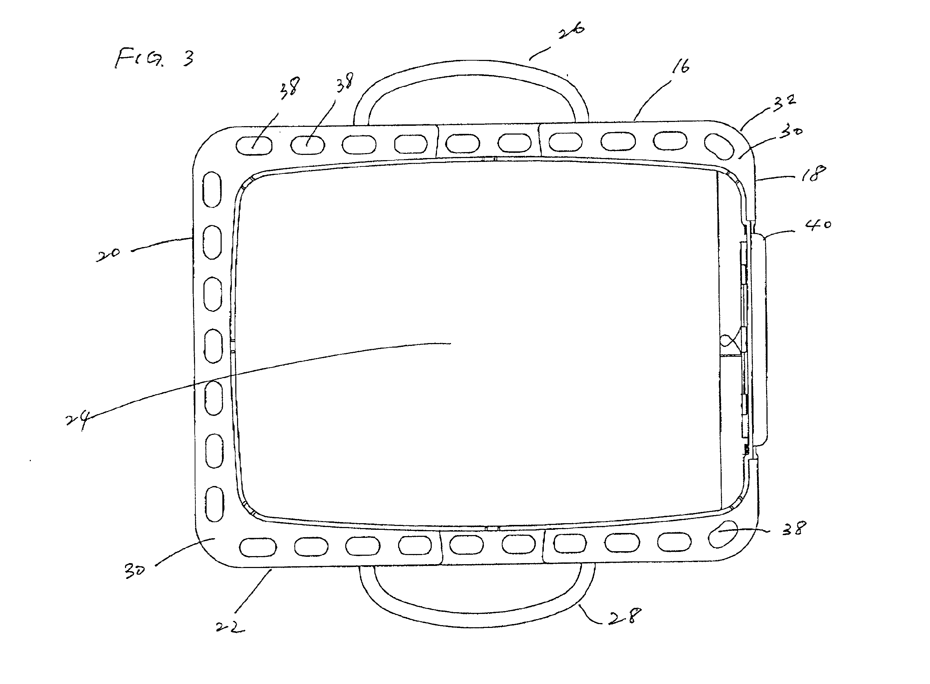

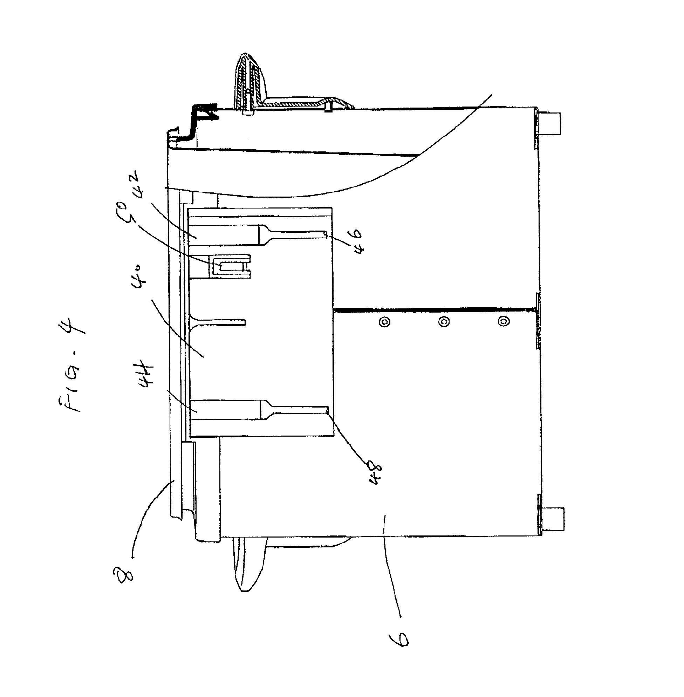

An embodiment of an electric deep fryer according to the present invention is shown in Figs. 1 to 9, and generally designated as 1. Referring firstly to Figs. 1 and 2, the deep fryer 1 is a stand alone unit of conveniently small size which can be placed on a work surface in a kitchen or at some other location in the home as desired. Alternatively, it can also be used in a restaurant.

The deep fryer 1 comprises a body 2 and a lid 4. The body 2 includes an outer housing 6. The body 2 further includes an oil-receiving container 8 sized to fit within the housing 6. The container 8 for cooking oil used in this embodiment has a capacity of approximately 2 liters. A control unit 10 is provided connecting to a heating element 12 and a thermo-sensor 14 (shown in Fig. 2 but not shown in Fig. 8) removably engages the body 2.

Referring specifically to Fig. 3, the housing 6 generally comprises four adjoining upstanding walls 16, 18, 20, 22 which define a space 24 in which the container 8 is fitted. A pair of handles 26, 28 is provided on opposite sides of the housing 6. A rim member 30 is connected to an upper rim 32 of the upstanding walls 16, 18, 20, 22. As shown in Figs. 1 to 4, the rim member 30 includes a raised edge or lip 34 sized to fit a complementary channel 36 arranged on the underside of an upper rim of the container 8. A plurality of apertures 38 is provided in the rim member 30.

At a rear end of the housing 6, a vertical plate 40 is secured on the wall 18 onto which the control unit 10 may be secured, as shown in Figs. 1 to 4. The plate 40 is formed with two grooves 42, 44 with narrower lower portions 46, 48 vertically arranged thereon. The control unit 10 generally includes an upstanding body 60 from which the heating element 12 is extended. A plurality of switches 52, 54, 56 and a control knob 58 are provided on an upper portion of the body 60 of the control unit 10, A safety actuator 50 is arranged on the plate 40 between the grooves 42, 44. A safety switch (not shown) arranged on a side of the body 60 facing the heating element 12 is engagable with the actuator 50. The thermo-sensor 14 is arranged adjacent to the heating element 12 and extends from and is connected to the control unit 10. The control unit 10 includes an electric circuit by means of which the operation of the deep fryer 1 is controlled. The heating element 12 is of convoluted shape with its upper end connected to the body 60 of the control unit 10. A lower region 62 of the heating element 12 is arranged at a lower region 64 of the container 8. There is a relatively large clearance of several centimeters between the lower region 62 of the heating element 12 and the bottom of the container 8.

Referring to Figs. 1, 5 and 6, the lid 4 is of double-walled construction and generally comprises an upper panel 66 and a lower panel 68 having a peripheral region which fits on an upper rim of the housing 6. The lower panel 68 is joined with the upper panel 66 at a lower rim 70 thereof. The lower panel 68 generally inclines through region 72 towards the upper panel 66 from the front (left hand end in Figure 1) to the rear (right hand end in Figure 1) up to a vent region 74 having a plurality of louvre-like apertures 76. The apertures 76 are located substantially at an uppermost region 78 of the surface of the lower panel 68. The lid 4 further comprises a control knob 86 controlling the opening and closing of the vent 74. The lid 4 provides cutout regions 80 through which a handle 82 of a food basket 84 to be placed in the container 8 may extend.

The container 8 is equipped with a hook 85 on its side opposite the control unit 10. A wire beading of the basket 84 is engagable with the hook, the basket 84 being suspended on the hook and on a feet-like portion of the wire beading.

During food frying, fumes generated rise towards the lid 4. As described, the position of the apertures 76 of the vent 74 is located at the highest region 78 of the lower panel 68 of the lid 4. This "chimney" construction facilities the exit of the fumes from within the deep fryer 1. The fumes inevitably contain some water vapor, some of which tends to condense on the surface 72 of the lower panel 68 of the lid 4. Since the lower panel 68 is inclined towards the rim 7, any water that condenses on the lower plate 68 tends to run along the lower panel 68 towards the rim 70 of the lid 1. This reduces spitting of oil while cooking should the condensed water drip to the center of hot cooking oil.

During washing of the lid 4, some water may become trapped in the lid 4 between the panels 66, 68. It can be dangerous if this water leaks out during the cooking process. Serious spitting of oil could result which could cause injury to a user. As described above, the lower panel 68 is inclined towards the rim 70 of the lid 4. This allows water to drain along an inner surface of the lower panel 68 to the rim 70 from where it can easily exit from the apertures 104 which lie laterally outside the interior of the container 8. It is envisaged that these features together reduce the retention of water in the lid.

Moreover, after washing, when the lid is placed in a drying rack in the kitchen water can drain from the apertures.

The apertures 38 in the rim member 30 also contribute to the safety of the deep fryer 1. During operation, the container 8 inevitably becomes very hot. The provision of the apertures allows good ventilation between a space 106 defined between the walls of the container 8 and the housing 6 and surroundings of the deep fryer. The housing 6 thus remains cool and safe to touch.

While the illustrated embodiment is particularly described in the context of a deep fryer, the present invention may readily apply to other cooking appliance.

Control of the operation of the deep fryer 1 is performed at the control unit 10. This is connected to an A/C source, typically 100/110 or 230/240V main supply.

As indicated above, the control unit 10 includes part of the electric circuit which is represented by the circuit diagram 86 of Fig. 8. The circuit includes the heating element 12 from which heating power is outputted, and also includes a main power switch 88, the safety switch 90, a thermo fuse 92 which is a thermal cut-out fuse, a variable thermostat 94 functioning as a switch which opens at a user adjustable temperature and a current regulator 96. In this embodiment, the heating element 12 has a rating of 3000W. The variable thermostat 94 may be adjusted by the control knob 58 to control the temperature attained by the cooking medium. The variable thermostat 94 functioning as a switch opening at a second predetermined temperature allows the temperature of cooking up to approximately 200°C. However, it has been found that the ideal temperature for frying of many types of food is about 190°C. The variable thermostat 94 is actuable by signals generated by a thermo-sensor 17 connected therewith.

The current regulator 96 is arranged in series with the variable thermostat 94 and comprises a fixed thermostat 98 functioning as a switch opening at a first predetermined temperature and a diode 100. The fixed thermostat 98 is actuable by signals generated by a thermo-sensor 15 connected therewith. The fixed thermostat 98 is arranged in parallel with the diode 100. It is to be noted that in this embodiment, the first predetermined temperature is approximately 175°C and the second predetermined temperature is the user adjustable temperature ranging from 175 to 190°C. The thermo-sensors 15, 17 are shown in Fig. 2 but not shown in the circuit diagram of Fig. 8 for the sake of clarity.

In use, the deep fryer 1 becomes operable only when the actuator 50 closes the safety switch 90 which occurs when the control unit 10 is properly assembled with the body 60 and engaged at the plate 40. As the deep fryer 1 is switched on and begins operation, cooking medium such as oil contained in the container 8 is heated by the heating element 12. The power output at an initial stage is at approximately 3000W as described above with all of the thermostat 92, fixed thermostat 98 and variable thermostat 94 closed. The temperature will eventually rise up to a point (e.g. 190°C) desired by a user in accordance with the adjustment of the control knob 58 which controls the variable thermostat 94. However, as the temperature detected by the thermo-sensor 15 reaches above the first predetermined temperature of the fixed thermostat 98, the thermostat 98 is activated to switch off. Current can flow only through the diode 100, with half of the cycle of alternating current passing the current regulator 96 being blocked. Consequently, the power outputted by the heating element 12 is reduced to approximately half of the initial 3000W. In practice, the first predetermined temperature may be 10°C to 30°C below the second predetermined temperature.

As the temperature of the cooking medium continues to rise and reaches above the second predetermined temperature, the variable thermostat 94 is activated to switch off. At this stage, electric current in the heating element 12 ceases.

It is envisaged that when foodstuffs to be cooked which are relatively lower in temperature are immersed using the basket 84 into the hot cooking oil of the container 8, the temperature of the cooking medium drops. If the temperature drops to below the first predetermined temperature, both the fixed 98 and variable 94 thermostats are closed whereby maximum heating power of 3000W is outputted by the heating element 12 until the first predetermined temperature has been reached.

Alternatively, if the temperature drops but remains at a temperature between the first and second predetermined temperatures, only the variable thermostat 94 but not the fixed thermostat 98 remains on whereby the heating power outputted by the heating element 12 is about half of its maximum outputable as explained. This level of power output is maintained until such time the cooking medium together with the food therein is heated up to above the second predetermined temperature whereat the variable thermostat 94 as well is switched off. This arrangement is important in the context of producing good quality fried food, which is explained in more detail below.

In the present invention as shown in this embodiment, the fact that the heating power is significantly reduced from 3000W to approximately 1500W when the cooking temperature reaches a first predetermined temperature while approaching the desired cooking temperature reduces the risk of overheating of the cooking oil. Since the heating element 12 operates at full power only when the cooking temperature is at a relatively low level, materials of lower specification may be used and the production costs can therefore be desirably reduced. Degradation of oil is also reduced. Most importantly, constant outputting of heating power at some level by the heating element 12 up to a temperature relatively closer to the user dedefined temperature allows better management and maintenance of the cooking temperature. Thus, food frying can be performed in a shorter time. As the time while the food being immersed in the oil is reduced, the fried food is inevitably much less oily or soggy. In summary, the use of the deep fryer 1 according to the present invention addresses various issues of producing high quality fried food, low material costs in manufacturing and safety of use.

It will be appreciated that the electric circuit 86 of the deep fryer according to the present invention is particularly advantageous to deep fryers of relatively small size with which temperature control of cooking oil is more difficult. Fig. 9 shows the frying time and cooking temperature of two deep fryers, the curve marked "A" is equipped with a conventional electrical circuit shown in Fig. 7 while the curve marked "B" is equipped with the electrical circuit 86 shown in Fig. 8. It can be seen that the cooking time is considerably reduced with the circuit of the invention.

## Claims

1. An electrical cooking appliance having;
electrical heating means;
temperature sensing means;
a first temperature sensitive switch connected to said temperature sensing means and connected to the electrical heating means arranged to open on sensing a first predetermined temperature and arranged in parallel with current limiting means;
a second temperature sensitive switch connected to said temperature sensing means and connected in series with the electrical heating means arranged to open at a second predetermined temperature higher than said first temperature.

2. An electrical cooking appliance according to claim 1 wherein the first temperature sensitive switch is adapted to open at a fixed temperature.

3. An electrical cooking appliance according to claim 1 or 2 wherein the second temperature sensitive switch is adapted to open at a user-selectable temperature.

4. An electrical cooking appliance according to claim 1, 2 or 3 wherein said first temperature is about 175°C.

5. An electrical cooking appliance according to any preceding claim wherein said second temperature is adjustable in the range from about 175°C to 200°C.

6. An electrical cooking appliance according to any preceding claim wherein the current limiting means is a diode.

7. An electrical cooking appliance according to any preceding claim wherein the electrical heating means is a heating element arranged to deliver about 3000 watts and at about 240V alternating current at a temperature below said first predetermined temperature.

8. An electric deep fryer comprising a housing having a receptacle for containing, in use, cooking oil, heating means for heating the oil and a lid for closing the receptacle, wherein the lid has upper and lower surfaces, the lower surface has a peripheral region at which it fits on an upper rim of the housing, an uppermost region of this lower surface being provided with a plurality of vents openings therein to release gases formed on cooking and having upwardly inclined surfaces between the peripheral region and the uppermost surface region.

9. An electric deep fryer according to claim 8 wherein the upper and lower lid surfaces define a substantially hollow lid.

10. An electric deep fryer according to claim 8 or 9 wherein the periphery of the lid is provided with at least one drain opening arranged at end of opposite lower edges of the lid.

11. An electric deep fryer according to any preceding claim wherein the vent openings in the lower surface are disposed opposite to openings in the upper lid surface.

12. An electric deep fryer according to any one of Claims 8 to 10 wherein the housing comprises an outer housing wall having an upper rim with a clearance provided between said outer housing wall and said receptable, and an inwardly-directed shoulder provided between the upper rim and the receptacle on which the receptacle rests, the shoulder being provided with a plurality of openings therein.

13. An electric deep fryer according to claim 12 wherein the shoulder is a separate part fitted on to the upper rim of the outer wall.

14. An electric deep fryer according to any one of claims 8 or 13 wherein the receptacle has an outwardly-directed ledge at its upper rim which sits on the shoulder,

15. An electric deep fryer according to claim 14 as dependent on claim 10 wherein the drain openings are arranged to lie laterally outside the receptacle interior and, whereby when fitted, any fluid draining from the lid does not drain directly into the receptacle interior.

16. An electric deep fryer according to any one of claims 8 to 15 wherein said lid further comprises a control knob controlling opening and closing of said vent openings provided on the uppermost region of said lower surface.

17. An electric deep fryer according to any one of claims 8 to 16 wherein said vent openings provided on the uppermost region of said lower surface are defined by a plurality of louvers arranged at the upper and lower lid surfaces.
